# EUROPEAN PATENT APPLICATION

(11) **EP 1 755 322 A2**
(43) Date of publication of application: **21.02.2007**
(21) Application number: 06254077.8
(22) Date of filing: 03.08.2006
(51) Int. Cl.: H04M 1/725, H04M 1/02, H04M 1/73

(54) **Handheld telecommunication device with key-lock and method of locking the keys thereof**

(30) Priority: 15.08.2005 US 203202
(71) Applicant: IDT Communication Technology Limited, Hunghom, Kowloon, Hong Kong SAR (CN)
(72) Inventor: Chan, Raymond, 9th Floor, Hunghom Kowloon Hong Kong SAR (CN)
(74) Representative: Jenkins, Richard Gavin

(57) **Abstract**

A handheld telecommunication device (100) comprising a housing (110), a plurality of keys (120), a display (130), a speaker (140), a microphone (150) and an electronic operating circuit (200) connected to and cooperable with the display (130), the speaker (140) and the microphone (150) for performing various functions including telecommunication functions. The operating circuit (200) includes a sensor (300) for sensing placement of the housing (110) close to a body part (10) of a human, user of the telecommunication device (100) within a relatively short distance, and control means (210) for in response deactivating the keys (120) for a period generally as long as the housing (110) is held within said distance. The invention also provides a method of controlling the keys (120) as described above, comprising sensing placement of the housing (110) close to the body part (10) within said distance, and deactivating the keys (120) for said period in response to the sensor (300) sensing said placement of the housing (110).

## Description

The present invention relates to a handheld telecommunication device having, in particular but not exclusively, a touch sensitive keypad that is provided with a key-lock function, and to a method of locking the keys thereof.

### BACKGROUND OF THE INVENTION

Touch sensing technology, including those based on capacitance detection, body resistance and magnetic field induction, have long been utilized for key input, e.g. in keypads, keyboards or discrete keys, for a wide range of electrical and electronic equipment and apparatus such as elevators, remote controllers and MP3 players, etc.

However, touch keypads have rarely been used in portable telecommunication devices like cordless phones, mobile phones and walkie-talkies. One of the characteristics of touch keypads is almost zero force of actuation, that is to say whenever the finger or any part of the body is placed on the key sensing area, despite only momentarily, a key press or signal is acknowledged.

Touch keypads offer a fresh or neat user feel but they are prone to false trigger. Besides the fingers, any part of the body that touches or gets sufficiently close to the sensing area, especially for the capacitive type, will indistinguishably be treated as a key press, in spite of that being intentional or accidental.

The problem is more prominent for handheld communication devices, for which the handset will always be held close to the face whereby the keypad is prone to false actuation by the face. This is a problem common to both touch sensitive keys and mechanical press keys.

To minimize this drawback, the key touch sensitivity may be reduced such that a valid key press will require a longer touch by the finger, or the capacitance threshold be adjusted to call for a larger change in capacitance or inductance before a key press is deemed successful.

In some cases, a physical key lock, i.e. key locking that requires one or two physical keying actions, is employed to temporarily lock the keypad under software control, whereby false key presses are ignored. This function is commonly known as "hold" and is widely used in portable audio players, for example, that usually incorporate mechanical press keys.

However, the use of a physical/software key lock is troublesome to users, in that immediate key operation is unavailable, and this hinders implementation in cordless and mobile phones in particular. In the situation where the keypad has been locked, to dial a number the user must first unlock the keypad, and this often requires pressing of two specific keys in quick succession. Although the keypad will automatically be re-activated upon detection of an incoming call to allow the user to answer the call straightaway, the keypad will then become vulnerable to false keying during the entire duration of the call.

The problem is more apparent for senior citizens and disabled people. Accidents may result from a missed call or failure to make an emergency call. This is a main reason why touch sensitive keypads are not popular in portable communication devices.

The invention seeks to mitigate or at least alleviate such problems or shortcomings by providing a new or improved handheld telecommunication device with key-lock and a method of locking the keys thereof.

### SUMMARY OF THE INVENTION

According to a first aspect of the invention, there is provided a handheld telecommunication device comprising a housing, a plurality of keys on the housing, a display on the housing, a sound generator in the housing, a microphone in the housing, and an electronic operating circuit housed in the housing and connected to and co-operable with the display, the sound generator and the microphone for performing various functions including telecommunication functions. The operating circuit includes a sensor for sensing placement of the housing close to a human body part of a human user of the telecommunication device within a relatively short distance, and control means for in response deactivating at least one of the keys for a period generally as long as the housing is held within said distance.

Preferably, the sensor is located at or adjacent to the sound generator.

It is preferred that the sensor comprises a contactless obstacle detector.

In a preferred embodiment, the sensor comprises a transmitter for transmitting a signal and a receiver for receiving said signal bounced back from said human body part, said signal received having a strength indicative of the distance of the housing from said human body part.

More preferably, the transmitter is adapted to transmit said signal generally forwardly from an earpiece of the housing associated with the sound generator.

More preferably, the transmitter comprises an infrared transmitter and the receiver comprises an infrared receiver.

Alternatively, the transmitter comprises an ultrasonic transmitter and the receiver comprises an ultrasonic receiver.

It is preferred that the control means is adapted to deactivate said at least one of the keys upon the sensor sensing placement of the housing to said human body part within said distance and to activate said at least one of the keys upon the sensor sensing placement of the housing from said human body part beyond said distance.

It is further preferred that the control means is adapted to deactivate said at least one of the keys with a time delay from the moment the sensor senses placement of the housing to said human body part within said distance.

It is further preferred that the control means is adapted to activate said at least one of the keys with a time delay from the moment the sensor senses placement of the housing from said human body part beyond said distance.

It is further preferred that the control means is adapted to activate said at least one of the keys with another, relatively longer time delay from the moment the sensor senses placement of the housing from said human body part beyond said distance.

The aforesaid telecommunication device preferably has a "talk" mode of operation, in that the sensor is operative only in the "talk" mode.

More preferably, the '"talk" mode is an operating mode in which the operating circuit is connected to an external telephone line.

Further more preferably, the "talk" mode is initiated by one of a key press to answer a call and a key press to make a call and is terminated by disconnection of the operating circuit from an external telephone line.

Advantageously, the control means includes an override to terminate said deactivating of said at least one of the keys before said period expires.

More advantageously, the override is implemented by continuous pressing of a designated key on the housing.

According to a second aspect of the invention, there is provided a method of controlling a plurality of keys on a housing of a handheld telecommunication device which also includes a display, a sound generator and a microphone, the method comprising the steps of:
providing a sensor for sensing and sensing placement of the housing close to a human body part of a human user of the telecommunication device within a relatively short distance; and
deactivating at least one of the keys for a period generally as long as the housing is held within said distance, in response to the sensor sensing said placement of the housing.

Preferably, the method includes locating the sensor at or adjacent to the sound generator.

It is preferred that the method includes using a contactless obstacle detector as the sensor.

In a preferred embodiment, the step of providing a sensor comprises:
providing a transmitter as a part of the sensor for transmitting and transmitting a signal; and
providing a receiver as another part of the sensor for receiving and receiving said signal bounced back from the human body part, the signal received having a strength indicative of the distance of the housing from the human body part.

More preferably, the method includes arranging the transmitter to transmit said signal generally forwardly from an earpiece of the housing associated with the sound generator.

More preferably, the method includes using an infrared transmitter as the transmitter and using an infrared receiver as the receiver.

Alternatively, the method includes using an ultrasonic transmitter as the transmitter and using an ultrasonic receiver as the receiver.

It is preferred that the step of deactivating at least one of the keys comprises:
deactivating said at least one of the keys upon the sensor sensing placement of the housing to the human body part within said distance; and
activating said at least one of the keys upon the sensor sensing placement of the housing from the human body part beyond said distance.

It is further preferred that the step of deactivating at least one of the keys includes deactivating said at least one of the keys with a time delay from the moment the sensor senses placement of the housing to the human body part within said distance.

It is further preferred that the step of deactivating at least one of the keys includes activating said at least one of the keys with a time delay from the moment the sensor senses placement of the housing from the human body part beyond said distance.

It is further preferred that the step of deactivating at least one of the keys includes activating said at least one of the keys with another, relatively longer time delay from the moment the sensor senses placement of the housing from the human body part beyond said distance.

In a preferred embodiment, the step of providing a sensor includes operating the sensor only in a "talk" mode of operation of the telecommunication device.

More preferably, the method includes operating the telecommunication device in the "talk" mode by connecting an operating circuit thereof to an external telephone line.

Further more preferably, the method includes initiating the "talk" mode by one of a key press to answer a call and a key press to make a call and terminating the "talk" mode by disconnecting the operating circuit from an external telephone line.

Advantageously, the method includes providing an override to terminate the step of deactivating at least one of the keys before said period expires.

More advantageously, the method includes implementing the override by continuously pressing a designated key on the housing.

### BRIEF DESCRIPTION OF DRAWTNGS

The invention will now be more particularly described, by way of example only, with reference to the accompanying drawings, in which:

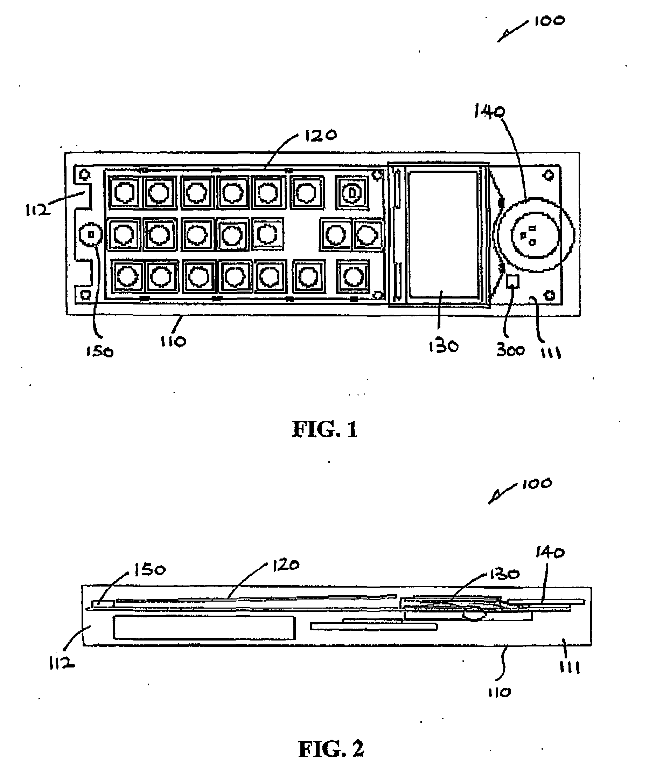

Figure 1 is an internal front view of an embodiment of a handheld telecommunication device that performs a key-lock method in accordance with the invention, the device having a keypad and a sensor;
Figure 2 is an internal side view of the telecommunication device of Figure 1;

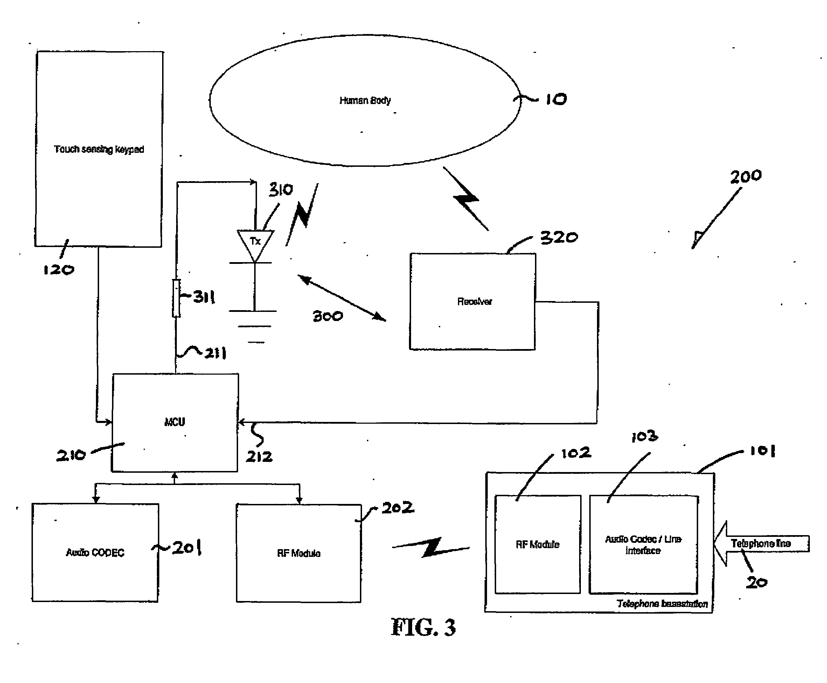

Figure 3 is a schematic functional block diagram of various components of the telecommunication device of Figure 1, relevant to the subject invention;
Figure 4 is a schematic flow chart illustrating the key-lock method for the keypad of the telecommunication device of Figure 1; and
Figure 5 is a schematic flow chart illustrating how the keypad is unlocked.

### DETAILED DESCRIPTION OF PREFERRED EMBODIMENT

Referring to the drawings, there is shown a handheld telecommunication device that performs a key-lock method embodying the invention, which takes the form of a cordless phone having a handset 100 and a base station 101 therefor. The handset 100 is herein referred to as the phone 100 for ease of reference, which has an oblong body housing 110 housing an electronic operating circuit 200. There are a touch sensitive numeric keypad 120 and an LCD display 130 on the front side of the housing 110 and also a speaker (sound generator) 140 and a microphone 150 within the housing's upper end (earpiece 111) and lower end (mouthpiece 112) respectively, all of which are connected to and co-operable with the operating circuit 200 for operation.

The operating circuit 200 incorporates a microprocessor control unit or MCU 210 which is programmed to implement general controls and to perform standard phone functions such as voice communication and address/phone book, etc. There are standard telephone circuit components in the operating circuit 200 as generally known in the art, such as an audio codec 201 and an RF module 202. The base station 101 includes, for example, an RF module 102 and an audio codec/line interface 103 for connection to an external telephone line or network 20.

The operating circuit 200 includes a contactless obstacle detector/sensor as provided by a photo-coupler 300 for sensing placement of the phone housing 110 close to or in contact with a body part of a human user during use, and in particular the head of the user holding the phone 100, within a relatively short distance of say, for example, 1cm to 3cm and in particular 3cm as in the described embodiment.

The photo-coupler 300 is formed essentially by a pair of co-operable transmitter 310 and receiver 320 which are integrated together and are located at or adjacent to the speaker 140 or earpiece 111. Both the transmitter 310 and the receiver 320 are connected to the MCU 210, with the former via a resistor 311 in series, for operation under program control of the MCU 210.

In operation, the transmitter 310 transmits an infrared signal generally forwardly, i.e. at right angles from the front side of the phone's earpiece 111, for reception by the adjacent to receiver 320 upon being bounced back from the user's head or more specifically his/her ear against or close to (i.e. within 3cm) which the earpiece 111 is placed during use of the phone 100. In response to the receiver 320 detecting the bounced back signal, the MCU 210 will deactivate or lock the keypad 120, or generally for as long as signal is detected.

The current drain in the transmitter 310 is controlled by a pin 211 of the MCU 210, which opens the gate of the transmitter 310 to drain the current into the transmitter 310. The drain current is governed by the resistor 311 and the dynamic impedance of the transmitter 310. The drain current is trimmed using the resistor 311 to regulate the output power of the transmitter 310 such that the receiver 320 and in turn the MCU 210 is able to differentiate the strength (energy) of the transmitter's infrared signal bounced back from a distance between shorter than or equal to 3cm and longer than 3cm.

The output of the receiver 320 is routed through to an 8-bit ADC pin 212 of the MCU 210 to digitalize the output voltage for the MCU 210 to determine whether or not the bounce-back distance or clearance is above 3cm by comparison with a certain threshold that represents a 3cm clearance. If the clearance is over 3cm, the receiver output voltage will be lower than the threshold and therefore the HOD 210 will not issue any software interrupt to lock the keypad 120. On the other hand, if the clearance drops to or below 3cm, the receiver output will rise to or above the threshold, in which case the MCU 210 locks the keypad 120.

The phone 100 has a "talk" mode (or "off-hook" mode), which is initiated by a key press to answer an incoming call or to dial a number to make an outgoing call and is terminated by disconnecting the operating circuit 200 from an external telephone line or network. The "talk" mode is an operation mode in which the operating circuit is connected to an external telephone line, i.e. online. The transmitter 310 and receiver 320 will be only activated or turned on to come into operation to detect of the user's face/ear in the "talk" mode. Other modes of operation include "standby" and "menu" modes, in which the obstacle senoor/detector 300 idles or is inoperative.

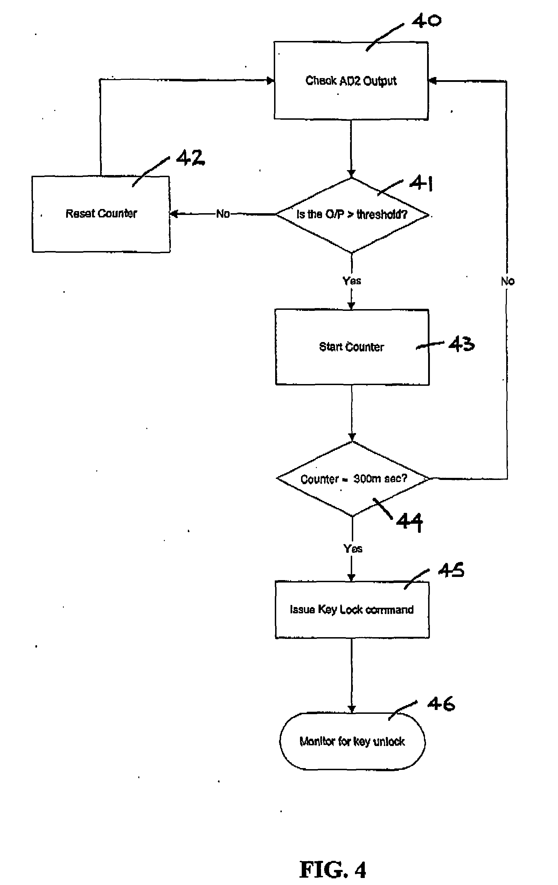

Referring to Figure 4, during the "talk" mode of the phone 100, the MCU 210 is programmed to, check the output voltage of the receiver 320 regularly (step 40) to see whether it exceeds the threshold (step 41). In the negative, a counter (timer) in the MCU 210 is reset to zero (step 42), and the operation repeats. In the affirmative, the MCU 210 starts the counter (step 43) and monitor the length of time during which the output voltage stays above the threshold.

If the high output voltage sustains 300ms or longer as timed by the counter (step 44), this is treated as a valid detection of the user's face/ear within 3cm and hence the MCU program will issue a key-lock command (step 45) to lock the keypad 120 against all subsequent key requests, with the exception of prolonged or continuous pressing of a designated key on the housing 110, such as the "5" key. Upon entering the key-lock mode, the MCU 210 will monitor for key unlocking (step 46).

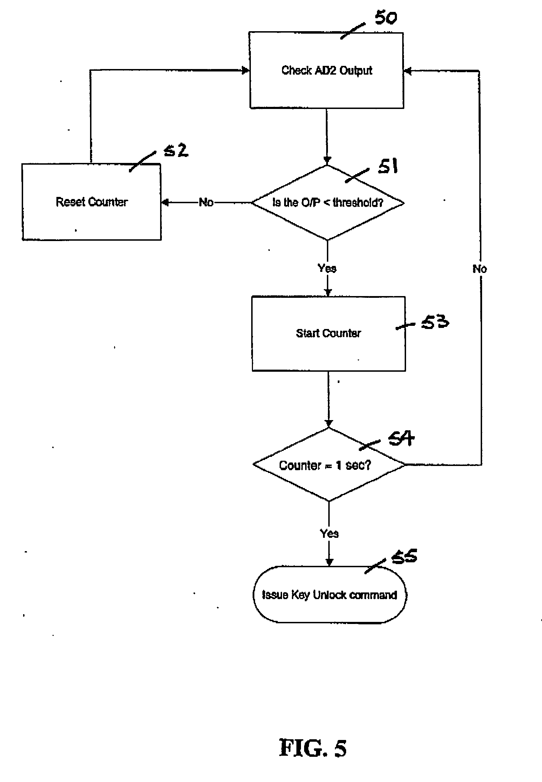

Referring to Figure 5, during the key-lock mode, the MCU 210 regularly checks the output voltage of the receiver 320 (step 50) to see whether it drops below the threshold or the clearance exceeds 3cm (step 51). In the negative, the same or another counter is reset to zero (step 52), and the operation repeats. In the affirmative, the MCU 210 starts the counter (step 53) and monitor the length of time during which the output voltage stays below the threshold.

If the low output voltage sustains one second (1,000ms) or longer as timed by the counter (step 54), this is taken as an indication that the phone 100 has been moved off the user's face/ear. The MCU program will then issue a key-unlock command (step 55) to re-activate the keypad 120, thereby terminating the key-lock mode. The key-lock mode will terminate immediately after the user disconnects the line.

A hysteresis loop is thus implemented introducing time delays (i.e. 300ms and 1,000ms) to avoid the phone 100 unnecessarily jumping in and out the key-lock mode, or between the key-lock and the key-unlock modes, in borderline or transitional cases.

The most vulnerable time during which any false key interpretation would give the most impact and troublesome experience to the phone user is the "talk" mode. Thus, the phone 100 will only be locked if and only if the user's face or body is detected in close proximity, i.e. within 3cm, while the phone 100 is in the "talk" mode, otherwise the keypad 120 will not be locked even if the phone 100 faces too close to the user i.e. within the predefined 3cm minimum distance.

During the "on-hook" or "standby" mode, the phone 100 is waiting for an incoming call or the user may be navigating the phone settings. In this mode, the keypad 120 should not be locked to allow the user to use the phone 100 freely and in particular to immediately answer a call (by pressing a key) that may come at any time.

While the user is navigating the phone settings either through the phone menu or direct key function, the phone 100 would normally be held by hand in front of the user. In this condition, as the user would be aware of any key press be it intentional or accidental, he/she would be able to react or follow up as appropriate, and for this reason key-lock is not needed.

During the "talk" or "off-hook" mode, as opposed to the "on-hook" mode, and in particular upon receiving an incoming call or dialling out a phone number, the user will immediately place the phone 100 close to his/her ear as the line is or is being connected. This is the period during which the touch sensitive keypad 120 (or mechanical press keys) will be prone to false trigger. The ear, chin or any other part of the face, or even the finger will be inevitably placed close to the keypad 120. The key-lock method or function, as herein described, is useful to avoid any interruption of the communication.

However, the phone 100 could not always be locked during the "talk" mode as the user may need to key in a number for phone banking or send a tone command by pressing the "#" key for remote auto answering system, for example. During such use, the phone 100 would normally be held in front of the user without its earpiece facing anything within the threshold distance of 3cm, and therefore the keypad 120 should not be locked or be unlocked in this condition.

There is a reset function for unlocking the keypad 120 to safeguard any faulty condition that the phone 100 is key-locked when it should not have been i.e. not under the pre-defined conditions. It is a manual override that can be used to release the keypad 120 at any time before the key-lock mode expires as desired. This function is performed by pressing the "5" key for over three seconds, whereupon the MCU 210 will issue a key-unlock signal to re-activate the keypad 120, thereby terminating the key-lock mode immediately until the "talk" mode is next entered.

The "5" key is situated in the middle of the keypad 120 and therefore it is less likely to be unintentionally pressed than most other keys, and given also the need to keep pressing for over three seconds, the manual key-unlock function would unlikely be accidentally invoked. Moreover, the "5" key usually has a small protrusion on the key body for easy identification, especially for the senior or blind people.

Although the keypad 120 is of the touch sensitive type, the subject invention is applicable to other types of keys or buttons whose operation requires a small force and/or shallow depression and is therefore vulnerable, such as capacitive keys, rubber keys and mechanical light press keys. Certain keys of the keypad 120 may be kept active for operation in the key-lock mode, for example the volume keys and the menu/up/down keys for interim use.

The aforesaid key-lock feature and method of the subject invention avoids false keying without compromising or undermining the keying sensitivity of the keypad.

It is envisaged that other kinds of handheld or portable telecommunication devices, such as mobile phones and walkie-talkies, may employ this invention. It is understood that the nature of the signal transmitted by the obstacle sensor 300 (i.e. infrared as described) is not critical and may be changed. For example, an ultrasonic signal may be used as an alternative for object detection, or the capacitive sensing technology may be employed instead.

In the case of using ultrasound, the signal emitted by the relevant ultrasonic transmitter is reflected by the human body part (e.g. the ear) and then detected by the associated ultrasonic receiver, and the delay in time of detecting the signal from the moment it was emitted is indicative of the distance of the mobile phone from the human body part.

The invention has been given by way of example only, and various other modifications of and/or alterations to the described embodiment may be made by persons skilled in the art without departing from the scope of the invention as specified in the appended claims.

## Claims

1. A handheld telecommunication device comprising:
a housing;
a plurality of keys on the housing;
a display on the housing;
a sound generator in the housing;
a microphone in the housing; and
an electronic operating circuit housed in the housing and connected to and co-operable with the display, the sound generator and the microphone for performing various functions Including telecommunication functions;
wherein the operating circuit includes:
a sensor for sensing placement of the housing close to a human body part of a human user of the telecommunication device within a relatively short distance: and
control means for in response deactivating at least one of the keys for a period generally as long as the housing is held within said distance.

2. The telecommunication device as claimed in claim 1, wherein the sensor is located at or adjacent to the sound generator.

3. The telecommunication device as claimed in claim 1, wherein the sensor comprises a contactless obstacle detector.

4. The telecommunication device as claimed in any one of claims 1 to 3, wherein the sensor comprises a transmitter for transmitting a signal and a receiver for receiving said signal bounced back from said human body part, said signal received having a strength indicative of the distance of the housing from said human body part.

5. The telecommunication device as claimed in claim 4, wherein the transmitter is adapted to transmit said signal generally forwardly from an earpiece of the housing associated with the sound generator.

6. The telecommunication device as claimed in claim 4, wherein the transmitter comprises an infrared transmitter and the receiver comprises an infrared receiver.

7. The telecommunication device as claimed in claim 4, wherein the transmitter comprises an ultrasonic transmitter and the receiver comprises an ultrasonic receiver.

8. The telecommunication device as claimed in any one of claims 1 to 3, wherein the control means is adapted to deactivate said at least one of the keys upon the sensor sensing placement of the housing to said human body part within said distance and to activate said at least one of the keys upon the sensor sensing placement of the housing from said human body part beyond said distance.

9. The telecommunication device as claimed in claim 8, wherein the control means is adapted to deactivate said at least one of the keys with a time delay from the moment the sensor senses placement of the housing to said human body part within said distance.

10. The telecommunication device as claimed in claim 8, wherein the control means is adapted to activate said at least one of the keys with a time delay from the moment the sensor senses placement of the housing from said human body part beyond said distance.

11. The telecommunication device as claimed in claim 9, wherein the control means is adapted to activate said at least one of the keys with another, relatively longer time delay from the moment the sensor senses placement of the housing from said human body part beyond said distance.

12. The telecommunication device as claimed in any one of claims 1 to 3, having a "talk" mode of operation, wherein the sensor is operative only in the "talk" mode.

13. The telecommunication device as claimed in claim 12, wherein the "talk" mode is an operating mode in which the operating circuit is connected to an external telephone line.

14. The telecommunication, device as claimed in claim 13, wherein the "talk" mode is initiated by one of a key press to answer a call and a key press to make a call and is terminated by disconnection of the operating circuit from an external telephone line.

15. The telecommunication device as claimed in any one of claims 1 to 3, wherein the control means includes an override to terminate said deactivating of said at least one of the keys before said period expires.

16. The telecommunication device as claimed in claim 15, wherein the override is implemented by continuous pressing of a designated key on the housing.

17. A method of controlling a plurality of keys on a housing of a handheld telecommunication device which also includes a display, a sound generator and a microphone, the method comprising the steps of:
providing a sensor for sensing and sensing placement of the housing close to a human body part of a human user of the telecommunication device within a relatively short distance; and
deactivating at least one of the keys for a period generally as long as the housing is held within said distance, in response to the sensor sensing said placement of the housing.

18. The method as claimed in claim 17, including locating the sensor at or adjacent to the sound generator.

19. The method as claimed in claim 17, including using a contactless obstacle detector as the sensor.

20. The method as claimed in any one of claims 17 to 19, wherein the step of providing a sensor comprises:
providing a transmitter as a part of the sensor for transmitting and transmitting a signal; and
providing a receiver as another part of the sensor for receiving and receiving said signal bounced back from the human body part, the signal received having a strength indicative of the distance of the housing from the human body part.

21. The method as claimed in claim 20, including arranging the transmitter to transmit said signal generally forwardly from an earpiece of the housing associated with the sound generator.

22. The method as claimed in claim 20, including using an infrared transmitter as the transmitter and using an infrared receiver as the receiver.

23. The method as claimed in claim 20, including using an ultrasonic transmitter as the transmitter and using an ultrasonic receiver as the receiver.

24. The method as claimed in any one of claims 17 to 19, wherein the step of deactivating at least one of the keys comprises:
deactivating said at least one of the keys upon the sensor sensing placement of the housing to the human body part within said distance; and
activating said at least one of the keys upon the sensor sensing placement of the housing from the human body part beyond said distance.

25. The method as claimed in claim 24, wherein the step of deactivating at least one of the keys includes deactivating said at least one of the keys with a time delay from the moment the sensor senses placement of the housing to the human body part within said distance.

26. The method as claimed in claim 24, wherein the step of deactivating at least one of the keys includes activating said at least one of the keys with a time delay from the moment the sensor senses placement of the housing from the human body part beyond said distance.

27. The method as claimed in claim 25, wherein the step of deactivating at least one of the keys includes activating said at least one of the keys with another, relatively longer time delay from the moment the sensor senses placement of the housing from the human body part beyond said distance.

28. The method as claimed in any one of claims 17 to 19, wherein the step of providing a sensor includes operating the sensor only in a "talk" mode of operation of the telecommunication device.

29. The method as claimed in claim 28, including operating the telecommunication device in the "talk" mode by connecting an operating circuit thereof to an external telephone line.

30. The method as claimed in claim 29, including initiating the "talk" mode by one of a key press to answer a call and a key press to make a call and terminating the "talk" mode by disconnecting the operating circuit from an external telephone line.

31. The method as claimed in any one of claims 17 to 19, including providing an override to terminate the step of deactivating at least one of the keys before said period expires.

32. The method as claimed in claim 31, including implementing the override by continuously pressing a designated key on the housing.
